# EUROPEAN PATENT SPECIFICATION

(11) **EP 2 743 556 B1**
(45) Date of publication and mention of the grant of the patent: **19.09.2018**
(21) Application number: 12197144.4
(22) Date of filing: 14.12.2012
(51) Int. Cl.: F16L 3/04

(54) **Clamp**
Klemme
Pince

(43) Date of publication of application: 18.06.2014
(73) Proprietor: Georg Fischer JRG AG, 4450 Sissach (CH)
(72) Inventor: Hustveit, Toralf, 3922 Porsgrunn (NO)
(74) Representative: Fenner, Seraina

(56) References cited:
- EP-A1- 2 476 942
- US-A- 3 122 346
- US-A- 5 390 876
- US-A- 5 411 228
- US-A- 5 601 262
- US-A1- 2005 116 123
- US-A1- 2009 050 350

## Description

The present invention relates to an assembly comprising a tube and a clamp for securing said tube on a structure, according to the generic part of claim 1.

Corrugated tubes are often used for transporting water etc or as outer tubes for water pipes and electrical cables installed in buildings, e.g. when being lead through walls or other parts of the construction. They are made from plastic materials such as polyethylene. When used as an outer tube for water containing pipes a pressure resistant tube in polyethylene is lead through a corrugated outer tube in the same way that as electric cables. This is done to lead any leaking water back toward a predetermined position and thus avoid water damages in the building structure.

The corrugated tube is then fastened outside or inside walls with clamps in order to keep them in position and avoid movements in the longitudinal or transversal directions, e.g. if the inner pipe is to be changed. At the present this is a standard routine in all new buildings in Norway and if possible it is implemented in old buildings when rehabilitated.

The clamps according to the known solutions are U-shaped clamps enclosing the tube and having fastening means at their legs to mount them on the wall or other structure. The claims have a rib at the surface being in contact with the corrugated tube, locking into the corrugated surface and stopping any movements with in the longitudinal and transversal directions.

According to the present building regulations, however, the corrugation tubes and pipes that are not part of a building heating system should be insulated. This represents a problem as the insulation makes it difficult to fasten the tube, and thus if the tube has to be fastened the insulation is usually removed and the clamps are mounted directly on the tube. This is a slow and cumbersome process and also reduces the effect of the insulation.
The US 3 122 346 and the EP 2 476 942 A1 disclose fixing systems which are usable for insulated installations. The drawbacks in these publications are that the tubes are not fixed and not prevented from movements in longitudinal and transversal directions, as above mentioned. It is therefore an object of this invention to provide a means to secure the position of an insulated tube without having to remove the insulation.

The object of the invention is obtained using an assembly according with claim 1.

This way a clamp is obtained being able to fasten in insulated tube to a wall or similar providing a stable position in both lateral and longitudinal directions, being easy to use and also inexpensive to produce.

The invention will be described more in detail below with reference to the accompanying drawings, illustrating the invention by way of example.
- Figure 1: illustrates a clamp according to the invention.
- Figure 2: illustrates the clamp in figure 1 as seen from below.
- Figure 3: illustrates the clamp mounted around an insulated tube on a surface.
- Figure 4: is a perspective drawing of the clamp according to the invention.

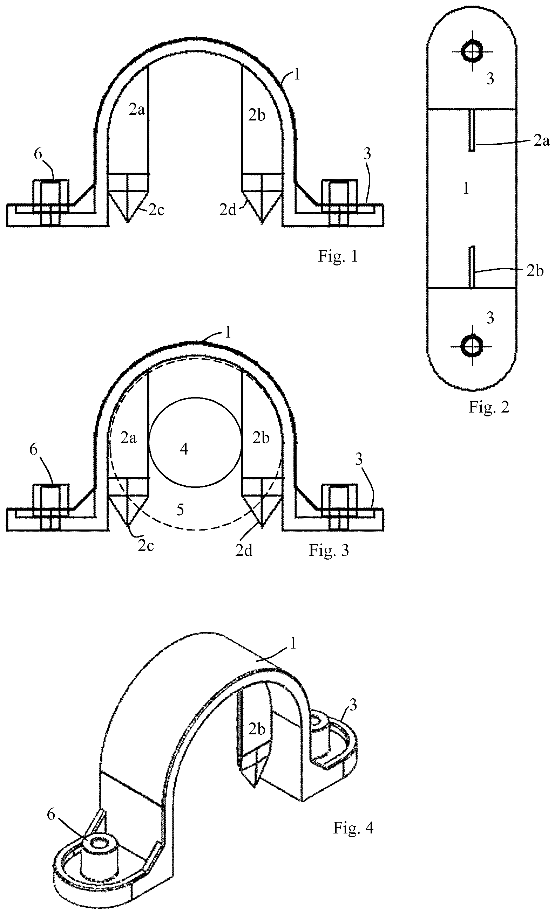

As is evident from figure 1 the clamp 1 according to the invention has a U-shape, the curvature of which being chosen so as to correspond to the outer circumference of the insulating layer covering the tube. The end legs of the clamp 1 illustrated in the drawings include mounting pads 3 with holes for screws 6 to be fastened to the wall, but other solutions being based on nails or adhesives may also be used.

The clamp according to the preferred embodiment of the invention includes two blades 2a,2b. As is seen in figure 2 the blades are thin and cuts throught the insulation without affecting the insulation much. In figure 3 the pipe 4 with insulation 5 is also shown, illustrating the embodiment where the distance between the edges of the blades 2a,2b are comparable to the diameter of the tube 4 inside the insulation layer 5.

As the insulation layer 5 may be more or less easy to cut through a preferred embodiment of the invention also includes sharp pointed end portions 2c,2d on the blades, thus cutting through the insulation layer 5 when pushed toward the surface on which it is to be mounted.

Thus the clamp body will maintain the lateral position of the insulated tube while the blades will maintain the tube position in the longitudinal direction while also in the preferred embodiment of the invention keep the tube centered inside the insulation. Given the right dimensions, and if the tube is corrugated, the blades may also be adapted able to grip into the corrugation of the tube and thus hold the tube itself in position. If the tube is not corrugated the blades may also be adapted to cut a little into the tube surface in order to hold it in place.

Other embodiments of the blades are also possible, e.g. following the whole inner surface of the clamp. The sharp end portions may be straight or have an angle from the pads toward the centre of the clamp. One additional function of pointed blade edges as illustrated in the drawings is that they may provide a grip into the structure, wall, etc on which the claim is mounted. The inner surface of the clamp body 1 may also be provided with ribs or similar structures to improve the grip on the insulation layer or if the insulation layer is sufficiently soft the distance between the legs of the clamp may be slightly less than the diameter of the insulation layer.

In order to maintain the insulation the blades are preferably made from a material having low heat conduction. Preferably the clamp and blades are made by injection molding of thermoplastic materials such as Polypropylene (PP), Polyethylene (PE), Polyamide (PA) or Acryl-Butadien-Styrene (ABS). Combinations of these materials, e.g. differing between the blade material, cutting edge material and/or clamp material, are also possible. It will also be possible to make the clamp in metals such as galvanized steel or aluminum.

Thus to summarize the invention relates to a clamp for securing tubes on a structure such as a wall or other building parts, where the tube is covered by a soft material such as an insulating material. The clamp having an essentially U-formed shape the outer ends of which being adapted to be fastened to said structure enclosing the outer circumference of the soft material covering the tube and having a defined thickness. The length of the outer ends are sufficient to maintain the tube position close to the structure.

According to the invention the inner surface of said U-shaped clamp is provided with at least one blade along the U-shape being adapted to cut into said soft material a distance being equal to or less than the soft material thickness so that it helps to maintain the position of the tube in the longitudinal position. The blade thus also supports the tube inside the soft material while the clamp supports the soft material.

According to the invention one blade is positioned at each leg of said U-shape, thus cutting into said soft material from both sides securing the position of the tube inside. The clamp legs or outer ends are parallel and the edges of said blades are parallel, the edges having being separated by a distance corresponding to the diameter of said tube inside the soft material.

If the tube is corrugated the distance between the blades may be chosen so as to grip into the corrugation of the tube inside the soft, insulating material.

The blades will preferably be made from a plastic material, and if the soft material is a thermally insulating material the blade is preferably also made from a thermally insulating material so as to maintain the thermal characteristics of the insulation. Other requirements such as electrical insulation may also be contemplated.

In order to cut efficiently through the soft material the blades may have pointed ends, possibly of a harder material at the outer parts of the U-shape.

## Claims

1. Assembly comprising a tube (4) and a clamp (1) for securing said tube (4) on a structure, the tube (4) being covered by a soft material (5), the clamp (1) having an U-shape the outer ends of which being adapted to fasten said structure enclosing the outer circumference of the soft material (5) having a defined thickness,
wherein the inner surface of said U-shaped clamp (1) is provided with at least one blade (2a, 2b) along the U-shape wherein the said at least one blade (2a, 2b) is positioned at each leg of said U-shape, to cut into said soft material (5) from both sides securing the position of the tube (4) inside , the said cut into said soft material having a distance being equal to or less than the soft material (5) thickness, the blades (2a, 2b) are supporting the tube inside the soft material (5) while the clamp supports the soft material (5), wherein said legs of the clamp (1) are parallel and the edges of said blades (2a, 2b) are parallel, the edges having being separated by a distance corresponding to the diameter of said tube (4).

2. Assembly according to claim 1, wherein the tube (4) is corrugated and the distance between the blades (2a, 2b) are chosen so as to grip into the corrugation of the tube (4) inside the insulating material.

3. Assembly according to claim 1, wherein said at least one blade (2a, 2b) is made from a plastic material.

4. Assembly according to claim 1, wherein said soft material (5) is a thermal insulating material and said at least one blade (2a, 2b) is made from a thermal insulating material.

5. Assembly according to claim 1, wherein the outer edges of the blades (2a, 2b) are pointed (2c, 2d).

## Patentansprüche

1. Anordnung, umfassend ein Rohr (4) und eine Klemme (1) zum Sichern des Rohrs (4) an einer Struktur, wobei das Rohr (4) mit einem weichen Material (5) bedeckt ist, die Klemme (1) eine U-Form aufweist, deren äußere Enden vorgesehen sind, um die Struktur zu befestigen, wobei der Außenumfang des weichen Materials (5) mit einer definierten Dicke umschlossen wird,
wobei die Innenfläche der U-förmigen Klemme (1) mit mindestens einer Klinge (2a, 2b) entlang der U-Form ausgestattet ist, wobei die mindestens eine Klinge (2a, 2b) an jedem Schenkel der U-Form positioniert ist, um von beiden Seiten in das weiche Material (5) zu schneiden, wodurch die Position des Rohrs (4) im Inneren gesichert wird, wobei der Schnitt in das weiche Material eine Distanz aufweist, die gleich der Dicke des weichen Materials (5) oder kleiner als diese ist, wobei die Klingen (2a, 2b) das Rohr im Inneren des weichen Materials (5) tragen, während die Klemme das weiche Material (5) trägt, wobei die Schenkel der Klemme (1) parallel sind und die Ränder der Klingen (2a, 2b) parallel sind, wobei die Ränder durch eine Distanz getrennt sind, die dem Durchmesser des Rohrs (4) entspricht.

2. Anordnung nach Anspruch 1, wobei das Rohr (4) geriffelt ist und die Distanz zwischen den Klingen (2a, 2b) so gewählt ist, um in die Riffelung des Rohrs (4) im Inneren des Isoliermaterials zu greifen.

3. Anordnung nach Anspruch 1, wobei die mindestens eine Klinge (2a, 2b) aus einem Kunststoffmaterial gefertigt ist.

4. Anordnung nach Anspruch 1, wobei das weiche Material (5) ein Wärmeisoliermaterial ist und die mindestens eine Klinge (2a, 2b) aus einem Wärmeisoliermaterial gefertigt ist.

5. Anordnung nach Anspruch 1, wobei die Außenränder der Klingen (2a, 2b) spitz zulaufend (2c, 2d) sind.

## Revendications

1. Ensemble comprenant un tube (4) et une pince (1) pour fixer ledit tube (4) sur une structure, le tube (4) étant recouvert d'un matériau mou (5), la pince (1) présentant une forme de U dont les extrémités extérieures sont adaptées pour attacher ladite structure qui entoure la circonférence extérieure du matériau mou (5) qui présente une épaisseur définie,
dans laquelle la surface intérieure de ladite pince en forme de U (1) est pourvue d'au moins une lame (2a, 2b) le long de la forme de U, dans laquelle ladite au moins une lame (2a, 2b) est positionnée à chaque branche de ladite forme de U, afin de tailler dans ledit matériau souple (5) à partir des deux côtés pour fixer la position du tube (4) à l'intérieur, ladite coupe dans ledit matériau souple présentant une distance qui est égale ou inférieure à l'épaisseur du matériau souple (5), les lames (2a, 2b) supportant le tube à l'intérieur du matériau souple (5) pendant que la pince supporte le matériau souple (5), dans laquelle lesdites branches de la pince (1) sont parallèles et les bords desdites lames (2a, 2b) sont parallèles, les bords étant séparés d'une distance qui correspond au diamètre dudit tube (4).

2. Pince selon la revendication 1, dans laquelle le tube (4) est ondulé et la distance entre les lames (2a, 2b) est choisie de manière à ce que celles-ci accrochent l'ondulation du tube (4) à l'intérieur du matériau isolant.

3. Pince selon la revendication 1, dans laquelle ladite au moins une lame (2a, 2b) est constituée d'une matière plastique.

4. Pince selon la revendication 1, dans laquelle ledit matériau mou (5) est un matériau d'isolation thermique et ladite au moins une lame (2a, 2b) est constituée d'un matériau thermiquement isolant.

5. Pince selon la revendication 1, dans laquelle les bords extérieurs des lames (2a, 2b) sont pointus.
